# EUROPEAN PATENT SPECIFICATION

(11) **EP 4 438 357 B1**
(45) Date of publication and mention of the grant of the patent: **19.11.2025**
(21) Application number: 24162959.1
(22) Date of filing: 12.03.2024
(51) Int. Cl.: B60J 1/20

(54) **ELECTRIC-POWERED DOOR CURTAIN**
ELEKTRISCH ANGETRIEBENER TÜRVORHANG
RIDEAU DE PORTE À ALIMENTATION ÉLECTRIQUE

(30) Priority: 15.03.2023 KR 20230033965
(43) Date of publication of application: 02.10.2024
(73) Proprietor: Ashimori Korea Co., Ltd., Wonju-si Gangwon-do 220-100 (KR)
(72) Inventor: LEE, Sungju, Wonju-si (KR); LEE, Changwoo, Wonju-si (KR)
(74) Representative: Müller Verweyen

(56) References cited:
- DE-A1- 102006 047 359
- DE-A1- 102011 006 994
- JP-A- S61 126 278

## Description

### BACKGROUND OF THE INVENTION

### 1. Field of the Invention

The present invention relates to an electric-powered door curtain, and more particularly, to an electric-powered door curtain capable of decreasing an operating torque of a motor by reducing an operating force by half by using a movable pulley, and relatively reducing a reduction ratio of a gear since a length of a wire is increased two times.

### 2. Description of the Related Art

In general, car door glass is used to ensure visibility when a car is driven and to ensure comfortable car interior dwelling ability. However, when there is a great amount of sunshine, such as the summer, a large amount of direct sunlight may be transmitted through the door glass to increase a temperature of a car interior and cause glare and the like to a driver, which may disturb safe driving.

In addition, even when a situation of the car interior has to be protected from an outside, invasion of privacy may be caused, which may cause inconvenience.

In order to solve such problems, a scheme of tinting the door glass has been used. However, regarding the tinting, a tinting film may not be easily removed once the tinting film is applied, and the tinting film may obstruct fields of view of other drivers according to a light transmittance of the film used, so that safe driving may be disturbed. In particular, upon nighttime driving, visibility of the driver on both sides and a rear side may be obstructed, which may lead to an accident.

In order to solve such problems, a door glass curtain has been installed and used to selectively completely block light introduced through the door glass.

As the door glass curtain described above, a manual curtain that allows a passenger of the interior to pull the curtain wound within a door panel upward and to latch and fix the curtain to a hook-shaped fixing part formed on a door glass frame has been adopted.

Some luxury vehicles have been equipped with blind-type electric-powered curtains, which require a large number of components and have complicated installation structures. In particular, a tension of the curtain that covers the door glass is insufficient, so that the curtain may be easily shaken by an external force (e.g., a wind introduced into the interior when the door glass is opened, etc.), resulting in a loss of an original curtain function.

Document DE 10 2006 047 359 A1 discloses an electric-powered door curtain.

### SUMMARY OF THE INVENTION

To solve the problems described above, an object of the present invention, which has been devised in consideration of the above points, is to provide an electric-powered door curtain in which a movable pulley may be used to reduce an operating force by half so that an operating torque of a motor is decreased, a length of a wire may be increased two times so that a reduction ratio of a gear may be relatively reduced, and an operating sound of the motor may be reduced.

To achieve the objects of the present invention described above, an electric-powered door curtain includes: a curtain unit including a shaft, a curtain blind wound around an outer surface of the shaft, and a shade bar fixed to an upper portion of the curtain blind to support the curtain blind, and configured to selectively shield a window of a vehicle from an outside as the curtain blind is wound around and unwound from the shaft; and a driving unit configured to move the shade bar upward and downward to allow the curtain blind to be wound around and unwound from the shaft, wherein the driving unit includes: a guide rail disposed at a lower portion of the shaft, perpendicular to the shaft, and having a predetermined length; a slider installed so as to be movable upward and downward along the guide rail, and including a movable pulley installed inside the slider so as to be fixed or rotatable; an antenna having one end fixed to one side of the slider and an opposite end fixed to the shade bar; a fixed pulley installed so as to be fixed or rotatable at a position adjacent to a lower side of the shaft; a wire having one end fixed at a position adjacent to the lower side of the shaft, and configured to pass through the fixed pulley via the movable pulley; and a winding device configured to wind an opposite end of the wire to adjust a length of the wire.

In addition, the winding device may include: a driving motor including a driving shaft on which a worm gear is rotatably installed; and a gear unit engaged with the worm gear so as to be rotatably driven, and around which the wire is wound by a rotation of the worm gear.

In addition, wherein the gear unit may include: a gearbox forming an inner space; a helical gear installed in the inner space of the gearbox so as to be rotatably engaged with the worm gear, and connected to a winding drum around which the wire is wound; and a rotation restraint device configured to restrain a rotation degree of the helical gear.

In addition, the rotation restraint device may include: a spur gear installed coaxially with the helical gear so as to be rotatable together with the helical gear; a stop gear installed in the inner space of the gearbox so as to be rotatably engaged with the spur gear, and including a gear side stopper protruding from one side plate surface of the stop gear; and a gearbox side stopper protruding from a plate surface of the gearbox, and engaged with one side surface and an opposite side surface of the gear side stopper according to a rotation of the stop gear.

In addition, a diameter of the spur gear may be relatively smaller than a diameter of the stop gear so that the wire is able to be wound around or unwound from the winding drum by a predetermined degree.

In addition, the curtain blind may be pressed on the outer surface of the shaft in a direction in which the curtain blind is wound around the outer surface of the shaft by elasticity caused by a spring so that the curtain blind is automatically wound around the outer surface of the shaft when a tension caused by the wire is removed.

As reviewed above, according to the electric-powered door curtain of the present invention, a movable pulley may be used to reduce an operating force by half so that an operating torque of a motor can be decreased, a length of a wire may be increased two times so that a reduction ratio of a gear can be relatively reduced, and a torque of the motor may be reduced by the movable pulley while the reduction ratio is decreased so that an operating sound of the motor can be reduced.

### BRIEF DESCRIPTION OF THE DRAWINGS

FIG. 1 is a perspective view showing a structure of an electric-powered door curtain according to one embodiment of the present invention.
FIG. 2 is an exploded perspective view showing a structure of a gearbox of the electric-powered door curtain according to one embodiment of the present invention.
FIG. 3 is a side view showing a connection structure of gears inside the gearbox of the electric-powered door curtain according to one embodiment of the present invention.
FIG. 4 is an operational diagram showing an operation of a rotation restraint device of the electric-powered door curtain according to one embodiment of the present invention.
FIG. 5 is an operational diagram showing an operation structure of the electric-powered door curtain according to one embodiment of the present invention.

### DETAILED DESCRIPTION OF THE INVENTION

Hereinafter, an electric-powered door curtain according to one embodiment of the present invention will be described in more detail with reference to the accompanying drawings.

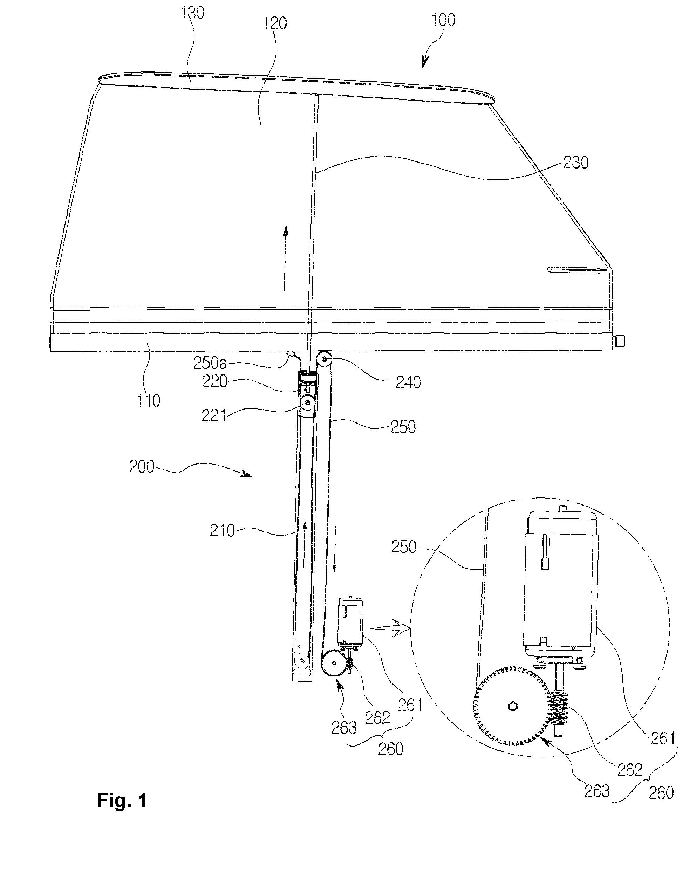

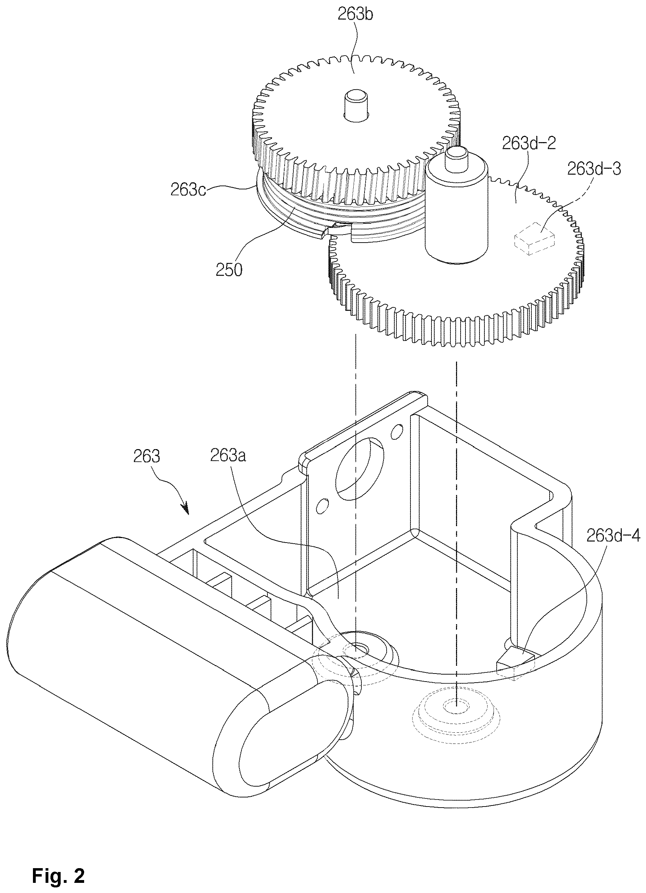

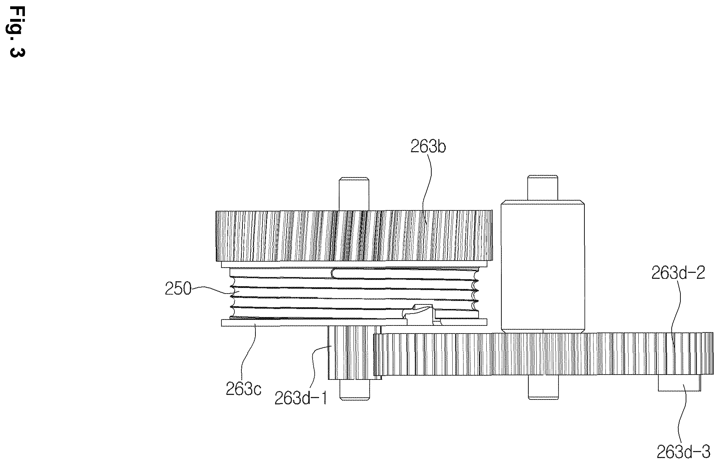

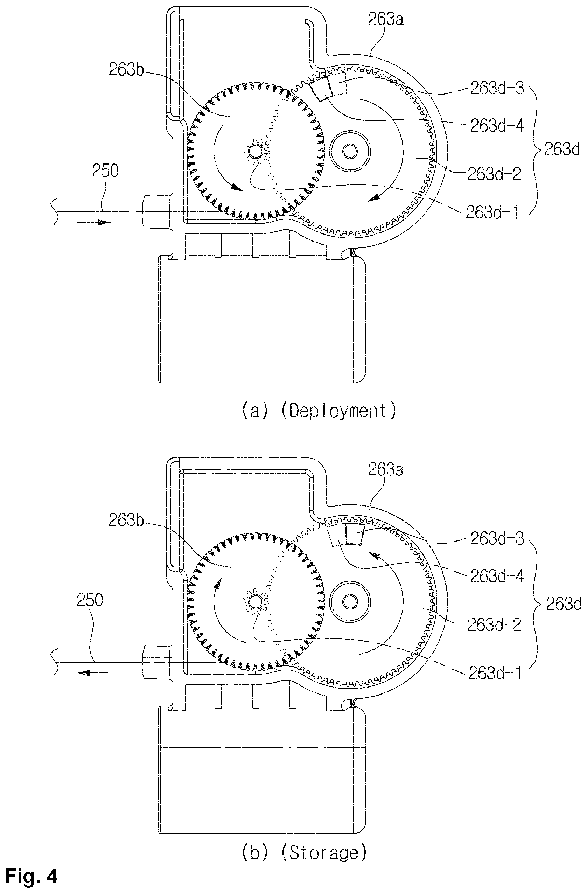

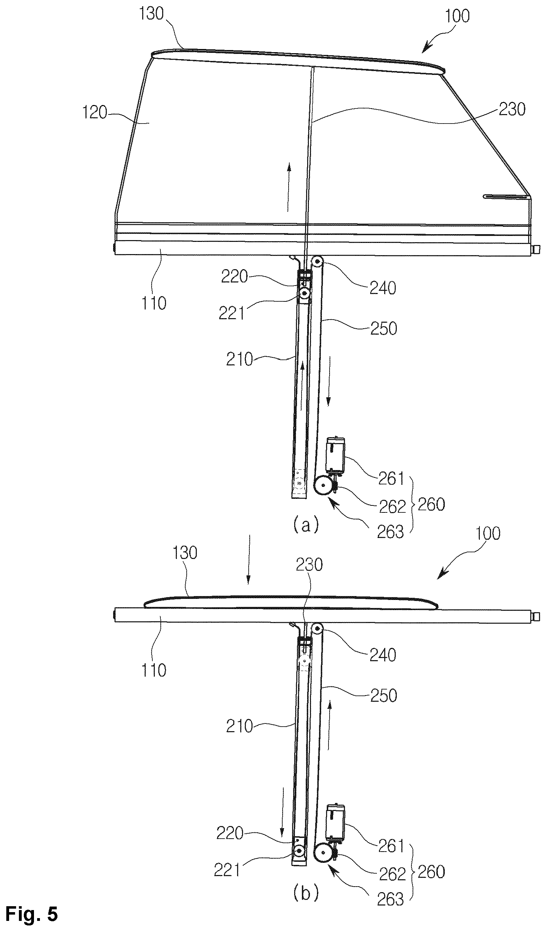

FIG. 1 is a perspective view showing a structure of an electric-powered door curtain according to one embodiment of the present invention, FIG. 2 is an exploded perspective view showing a structure of a gearbox of the electric-powered door curtain according to one embodiment of the present invention, FIG. 3 is a side view showing a connection structure of gears inside the gearbox of the electric-powered door curtain according to one embodiment of the present invention, FIG. 4 is an operational diagram showing an operation of a rotation restraint device of the electric-powered door curtain according to one embodiment of the present invention, and FIG. 5 is an operational diagram showing an operation structure of the electric-powered door curtain according to one embodiment of the present invention.

As shown in these drawings, the electric-powered door curtain according to the present invention may include: a curtain unit 100 including a shaft 110, a curtain blind 120 wound around an outer surface of the shaft 110, and a shade bar 130 fixed to an upper portion of the curtain blind 120 to support the curtain blind 120, and configured to selectively shield a window of a vehicle from an outside as the curtain blind 120 is wound around and unwound from the shaft 110; and a driving unit 200 configured to move the shade bar 130 upward and downward to allow the curtain blind 120 to be wound around and unwound from the shaft 110, wherein the driving unit 200 includes: a guide rail 210 disposed at a lower portion of the shaft 110, perpendicular to the shaft 110, and having a predetermined length; a slider 220 installed so as to be movable upward and downward along the guide rail 210, and including a movable pulley 221 installed inside the slider 220 so as to be fixed or rotatable; an antenna 230 having one end fixed to one side of the slider 220 and an opposite end fixed to the shade bar 130; a fixed pulley 240 installed so as to be fixed or rotatable at a position adjacent to a lower side of the shaft 110; a wire 250 having one end fixed at a position 250a adjacent to the lower side of the shaft 110, and configured to pass through the fixed pulley 240 via the movable pulley 221; and a winding device 260 configured to wind an opposite end of the wire 250 to adjust a length of the wire 250.

The curtain unit 100 may be installed on the window of the vehicle to selectively shield the window of the vehicle from the outside so as to serve to prevent sunlight from being emitted into the vehicle, thereby preventing a temperature inside the vehicle from being increased or preventing glare.

The curtain unit 100 may include a shaft 110, a curtain blind 120 pressed on the outer surface of the shaft 110 in a direction in which the curtain blind 120 is wound by a spring, and a shade bar 130 configured to support an upper end of the curtain blind 120.

The shaft 110 may be installed so as to be rotatable by the spring so that the curtain blind 120 may be maintained in a state in which the curtain blind 120 is wound around the outer surface of the shaft 110 when an external force that pulls the curtain blind 120 is not applied.

In other words, the curtain blind 120 may be pressed on the outer surface of the shaft 110 in a direction in which the curtain blind 120 is wound around the outer surface of the shaft 110 by elasticity caused by the spring so that the curtain blind 120 may be automatically wound around the outer surface of the shaft 110 when a tension caused by the wire 250 is removed.

The curtain blind 120 may be maintained in the state in which the curtain blind 120 is wound around the shaft 110 so that the window of the vehicle may be opened when an external force that pulls an end of the curtain blind 120 does not exist, and may be unwound from the shaft 110 so as to serve to shield the window of the vehicle from the outside when an external force is applied by the driving unit 200.

The shade bar 130 may serve to fix the entire end of the curtain blind 120 so that a uniform tension may be applied to the entire end of the curtain blind 120 so as to deploy the curtain blind 120.

The driving unit 200 may serve to move the shade bar 130 upward and downward to allow the curtain blind 120 to be wound around and unwound from the shaft 110, and may include a guide rail 210, a slider 220, a movable pulley 221, an antenna 230, a fixed pulley 240, a wire 250, and a winding device 260.

The guide rail 210 may be disposed at the lower portion of the shaft 110, may be perpendicular to the shaft 110, may have a predetermined length, and may serve to guide a sliding movement of the slider 220.

The slider 220 may include a movable pulley 221 installed inside the slider 220, and may move upward and downward in a longitudinal direction of the guide rail 210 to reduce a tension applied to the wire 250 by the movable pulley 221 installed inside the slider 220 when the curtain blind 120 is unwound from the shaft 110.

The antenna 230 may have one end fixed to one side of the slider 220 and an opposite end fixed to the shade bar 130, and may move upward and downward in the longitudinal direction of the guide rail 210 according to the movement of the slider 220 so that the curtain blind 120 may be wound around or unwound from the shaft 110.

The fixed pulley 240 may be installed at a position adjacent to the lower side of the shaft 110 so as to serve to allow the wire 250 to pass through the fixed pulley 240 to support the wire 250 when the tension is applied to the wire 250.

The wire 250 may have one end fixed at a position 250a adjacent to the lower side of the shaft 110, may pass through the fixed pulley 240 via the movable pulley 221, and may be wound around a winding drum 263c by driving of the winding device 260 to move the slider 220 so that the tension may be applied to the curtain blind 120.

The winding device 260 may serve to wind the opposite end of the wire 250 to adjust the length of the wire 250, and the winding device 260 may include: a driving motor 261 including a driving shaft on which a worm gear 262 is rotatably installed; and a gear unit 263 engaged with the worm gear 262 so as to be rotatably driven, and around which the wire 250 is wound by a rotation of the worm gear 262.

The driving motor 261 may include the driving shaft on which the worm gear 262 is rotatably installed, and may serve to allow the driving shaft to be selectively rotatably driven in a forward direction or a reverse direction when a power is applied so that the wire 250 may be wound around and unwound from the winding drum 263c.

As shown in FIGS. 2 to 4, the gear unit 263 may include: a gearbox 263a forming an inner space; a helical gear 263b installed in the inner space of the gearbox 263a so as to be rotatably engaged with the worm gear 262, and connected to a winding drum 263c around which the wire 250 is wound; and a rotation restraint device 263d configured to restrain a rotation degree of the helical gear 263b.

The gearbox 263a may be a member having a predetermined inner space and forming an exterior of the gear unit 263, in which the helical gear 263b and the rotation restraint device 263d may be rotatably installed in the inner space.

The helical gear 263b may be engaged with the worm gear 262 and installed so as to be rotatably driven together with the winding drum 263c and a spur gear 263d-1 when the worm gear 262 is rotatably driven by driving of the driving motor 261.

The winding drum 263c may be rotatably driven together with the helical gear 263b by the rotatable driving of the helical gear 263b so that the wire 250 may be wound around or unwound from an outer surface of the winding drum 263c, and as a result, the curtain blind 120 may be deployed or wound around the outer surface of the shaft 110.

The rotation restraint device 263d may include: a spur gear 263d-1 installed coaxially with the helical gear 263b so as to rotatable together with the helical gear 263b; a stop gear 263d-2 installed in the inner space of the gearbox 263a so as to be rotatably engaged with the spur gear 263d-1, and including a gear side stopper 263d-3 protruding from one side plate surface of the stop gear 263d-2; and a gearbox side stopper 263d-4 protruding from a plate surface of the gearbox 263a, and engaged with one side surface and an opposite side of the gear side stopper 263d-3 according to a rotation of the stop gear 263d-2.

The spur gear 263d-1 may be installed coaxially with the helical gear 263b so as to be rotatable together with the helical gear 263b, and may be rotatably engaged with the stop gear 263d-2; and the stop gear 263d-2 may be installed in the inner space of the gearbox 263a so as to be rotatably engaged with the spur gear 263d-1, and may include a gear side stopper 263d-3 protruding from one side plate surface of the stop gear 263d-2.

In addition, a diameter of the spur gear 263d-1 may be relatively smaller than a diameter of the stop gear 263d-2 so that the wire 250 may be wound around or unwound from the winding drum 263c by a predetermined degree.

Therefore, when the helical gear 263b rotates to wind or unwind the wire 250 around or from the winding drum 263C, the spur gear 263d-1 may rotate together with the helical gear 263b so that the stop gear 263d-2 may gradually rotate, and when the spur gear 263d-1 is rotatably driven enough to complete the winding or unwinding of the wire 250, the stop gear 263d-2 may be rotated almost one turn to allow the gear side stopper 263d-3 to make contact with the gearbox side stopper 263d-4 so as to restrain the rotation of the helical gear 263b so that an excessive tension may be prevented from being applied to the wire 250.

To this end, it may be preferable to adjust an initial position of the gear side stopper 263d-3 such that the gear side stopper 263d-3 may make contact with one side of the gearbox side stopper 263d-4 when the curtain blind 120 is wound around the outer surface of the shaft 110, and the gear side stopper 263d-3 may make contact with an opposite side of the gearbox side stopper 263d-4 when the curtain blind 120 is unwound from the outer surface of the shaft 110 so as to be fully deployed.

A process of operating the electric-powered door curtain according to one embodiment of the present invention, which has the configuration described above, will be described below with reference to FIG. 5.

First, as shown in (a) of FIG. 5, in order to shield the window of the vehicle from the outside by deploying the curtain blind 120 of the electric-powered door curtain according to the present invention, the driving motor 261 may be driven to allow the helical gear 263b to be rotatably driven in a counterclockwise direction, so that the wire 250 may be wound around the outer surface of the winding drum 263c to reduce a length of an unwound portion of the wire 250, and thus the slider 220 may move upward along the guide bar 210 while the movable pulley 221 installed inside the slider 220 is supported on the wire 250.

As the antenna 230 also moves upward together with the slider 220 according to the upward movement of the slider 220, the shade bar 130 fixed to an end of the antenna 230 may move upward to deploy the curtain blind 120, so that the window of the vehicle may be shielded from the outside.

In this case, the gear side stopper 263d-3 may make contact with the one side of the gearbox side stopper 263d-4 in an initial state in which the curtain blind 120 is wound around the shaft 110, and when the curtain blind 120 is unwound from the shaft 110 so as to be fully deployed, the gear side stopper 263d-3 may make contact with the opposite side of the gearbox side stopper 263d-4 to restrain the rotation of the helical gear 263b, so that the driving of the driving motor 261 may be stopped, thereby completing installation of the electric-powered door curtain.

Conversely, as shown in (b) of FIG. 4, in order to open the window of the vehicle by allowing the curtain blind 120 of the electric-powered door curtain according to the present invention to be wound around the outer surface of the shaft 110, the driving motor 261 may be driven to allow the helical gear 263b to be rotatably driven in a clockwise direction.

The wire 250 may be unwound from the outer surface of the winding drum 263c by the rotation of the helical gear 263b to increase the length of the unwound portion of the wire 250, so that the slider 220 may move downward along the guide bar 210 while the movable pulley 221 installed inside the slider 220 is supported on the wire 250.

As the antenna 230 also moves downward together with the slider 220 according to the downward movement of the slider 220, the shade bar 130 fixed to the end of the antenna 230 may move downward to allow the curtain blind 120 to be wound around the outer surface of the shaft 110, so that the window of the vehicle may be opened.

According to a scheme in which the curtain blind 120 is wound around the outer surface of the shaft 110, the tension applied to the wire 250 may be released as the wire 250 is unwound from the winding drum 263c, so that the shaft 110 may be rotated by the spring installed on the shaft 110, and thus the curtain blind 120 may be wound around the outer surface of the shaft 110.

In addition, the gear side stopper 263d-3 may make contact with the opposite side of the gearbox side stopper 263d-4 in a state in which the curtain blind 120 is unwound from the shaft 110 so as to be deployed, and when the curtain blind 120 is wound around the shaft 110 to allow the window to be opened to communicate with the outside, the gear side stopper 263d-3 may make contact with the one side of the gearbox side stopper 263d-4 to restrain the rotation of the helical gear 263b, so that the driving of the driving motor 261 may be stopped, thereby completing storage of the electric-powered door curtain.

According to the electric-powered door curtain of one embodiment of the present invention, which has the configuration described above, a movable pulley may be used to reduce an operating force by half so that an operating torque of a motor may be decreased, a length of a wire may be increased two times so that a reduction ratio of a gear may be relatively reduced, and a torque of the motor may be reduced by the movable pulley while the reduction ratio is decreased so that an operating sound of the motor may be reduced.

Since only some of preferred embodiments that may be implemented by the present invention have been described above, it is to be noted that the scope of the present invention should not be construed as being limited to the above embodiments, and the scope of the present invention is defined by the accompanying claims.

## Claims

1. An electric-powered door curtain comprising:
a curtain unit (100) including a shaft (110), a curtain blind (120) wound around an outer surface of the shaft (110), and a shade bar (130) fixed to an upper portion of the curtain blind (120) to support the curtain blind (120), and configured to selectively shield a window of a vehicle from an outside as the curtain blind (120) is wound around and unwound from the shaft (110); and
a driving unit (200) configured to move the shade bar (130) upward and downward to allow the curtain blind (120) to be wound around and unwound from the shaft (110),
wherein the driving unit (200) includes:
a guide rail (210) disposed at a lower portion of the shaft (110), facing in a direction intersecting the shaft (110), and having a predetermined length;
a slider (220) installed so as to be movable upward and downward along the guide rail (210), and including a movable pulley (221) installed inside the slider (220) so as to be fixed or rotatable;
an antenna (230) having one end fixed to one side of the slider (220) and an opposite end fixed to the shade bar (130);
a fixed pulley (240) installed so as to be fixed or rotatable at a position adjacent to a lower side of the shaft (110);
a wire (250) having one end fixed at a position (250a) adjacent to the lower side of the shaft (110), and configured to pass through the fixed pulley (240) via the movable pulley (221); and
a winding device (260) configured to wind an opposite end of the wire (250) to adjust a length of the wire (250).

2. The electric-powered door curtain of claim 1, wherein the winding device (260) includes:
a driving motor (261) including a driving shaft on which a worm gear (262) is rotatably installed; and
a gear unit (263) engaged with the worm gear (262) so as to be rotatably driven, and around which the wire (250) is wound by a rotation of the worm gear (262).

3. The electric-powered door curtain of claim 2, wherein the gear unit (263) includes:
a gearbox (263a) forming an inner space;
a helical gear (263b) installed in the inner space of the gearbox (263a) so as to be rotatably engaged with the worm gear (262), and connected to a winding drum (263c) around which the wire (250) is wound; and
a rotation restraint device (263d) configured to restrain a rotation degree of the helical gear (263b).

4. The electric-powered door curtain of claim 3, wherein the rotation restraint device (263d) includes:
a spur gear (263d-1) installed coaxially with the helical gear (263b) so as to be rotatable together with the helical gear (263b);
a stop gear (263d-2) installed in the inner space of the gearbox (263a) so as to be rotatably engaged with the spur gear (263d-1), and including a gear side stopper (263d-3) protruding from one side plate surface of the stop gear (263d-2); and
a gearbox side stopper (263d-4) protruding from a plate surface of the gearbox (263a), and engaged with one side surface and an opposite side surface of the gear side stopper (263d-3) according to a rotation of the stop gear (263d-2).

5. The electric-powered door curtain of claim 4, wherein a diameter of the spur gear (263d-1) is relatively smaller than a diameter of the stop gear (263d-2) so that the wire (250) is able to be wound around or unwound from the winding drum (263c) by a predetermined degree.

6. The electric-powered door curtain of one of claims 1 to 5, wherein the curtain blind (120) is pressed on the outer surface of the shaft (110) in a direction in which the curtain blind (120) is wound around the outer surface of the shaft (110) by elasticity caused by a spring (not shown) so that the curtain blind (120) is automatically wound around the outer surface of the shaft (110) when a tension caused by the wire (250) is removed.

## Patentansprüche

1. Ein elektrisch angetriebener Türvorhang, der umfasst:
eine Vorhangeinheit (100), die eine Welle (110), eine Vorhangjalousie (120), die um eine Außenoberfläche der Welle (110) gewickelt ist, und eine Rollostange (130), die an einem oberen Abschnitt der Vorhangjalousie (120) befestigt ist, um die Vorhangjalousie (120) zu tragen, enthält, und die konfiguriert ist, ein Fenster eines Fahrzeugs von außen wahlweise abzuschatten, während die Vorhangjalousie (120) um die Welle (110) gewickelt und davon abgewickelt wird; und
eine Antriebseinheit (200), die dafür konfiguriert ist, die Rollostange (130) nach oben und unten zu bewegen, um zu ermöglichen, dass die Vorhangjalousie (120) um die Welle (110) gewickelt und davon abgewickelt wird, wobei die Antriebseinheit (200) enthält:
eine Führungsschiene (210), die an einem unteren Abschnitt der Welle (110) angeordnet ist, die in eine Richtung, die die Welle (110) schneidet, weist und die eine vorgegebene Länge aufweist;
ein Gleitstück (220), das entlang der Führungsschiene (210) nach oben und unten beweglich eingebaut ist und das eine bewegliche Rillenscheibe (221) enthält, die innerhalb des Gleitstücks (220) eingebaut ist, damit sie fest oder drehbar ist;
eine Antenne (230) mit einem Ende, das an einer Seite des Gleitstücks (220) befestigt ist, und mit einem gegenüberliegenden Ende, das an der Rollostange (130) befestigt ist;
eine feste Rillenscheibe (240), die so eingebaut ist, dass sie an einer Stelle, die zu einer Unterseite der Welle (110) benachbart ist, fest oder drehbar ist;
einen Draht (250), der ein Ende aufweist, das an einer Stelle (250a) benachbart zu der Unterseite der Welle (110) befestigt ist, und der dafür konfiguriert ist, über die bewegliche Rillenscheibe (221) durch die feste Rillenscheibe (240) zu gehen; und
eine Wickelvorrichtung (260), die dafür konfiguriert ist, ein gegenüberliegendes Ende des Drahts (250) zu wickeln, um eine Länge des Drahts (250) einzustellen.

2. Der elektrisch angetriebene Türvorhang nach Anspruch 1, wobei die Wickelvorrichtung (260) enthält:
einen Antriebsmotor (261), der eine Antriebswelle enthält, an der eine Schnecke (262) drehbar eingebaut ist; und
eine Zahnradeinheit (263), die mit der Schnecke (262) in Eingriff ist, damit sie drehbar angetrieben wird, und um die durch eine Drehung der Schnecke (262) der Draht (250) gewickelt wird.

3. Der elektrisch angetriebene Türvorhang nach Anspruch 2, wobei die Zahnradeinheit (263) enthält:
ein Getriebegehäuse (263a), das einen Innenraum bildet; ein Schrägstirnrad (263b), das in dem Innenraum des Getriebegehäuses (263a) in der Weise eingebaut ist, dass es mit der Schnecke (262) drehbar in Eingriff ist, und das mit einer Wickeltrommel (263c), um die der Draht (250) gewickelt wird, verbunden ist; und
eine Drehbeschränkungsvorrichtung (263d), die dafür konfiguriert ist, einen Grad der Drehung des Schrägstirnrads (263b) zu beschränken.

4. Der elektrisch angetriebene Türvorhang nach Anspruch 3, wobei die Drehbeschränkungsvorrichtung (263d) enthält:
ein Geradstirnrad (263d-1), das koaxial mit dem Schrägstirnrad (263b) in der Weise eingebaut ist, dass es zusammen mit dem Schrägstirnrad (263b) drehbar ist;
ein Sperrrad (263d-2), das in dem Innenraum des Getriebegehäuses (263a) in der Weise eingebaut ist, dass es mit dem Geradstirnrad (263d-1) drehbar in Eingriff ist, und
das einen Anschlag (263d-3) auf der Zahnradseite enthält, der von einer Seitenplattenoberfläche des Sperrrads (263d-2) vorsteht; und,
einen Anschlag (263d-4) auf der Getriebegehäuseseite, der von einer Plattenoberfläche des Getriebegehäuses (263a) vorsteht und der in Übereinstimmung mit einer Drehung des Sperrrads (263d-2) mit einer Seitenfläche und mit einer gegenüberliegenden Seitenfläche des Anschlags (263d-3) auf der Zahnradseite in Eingriff ist.

5. Der elektrisch angetriebene Türvorhang nach Anspruch 4, wobei ein Durchmesser des Geradstirnrads (263d-1) verhältnismäßig kleiner als ein Durchmesser des Sperrrads (263d-2) ist, sodass der Draht (250) um einen vorgegebenen Grad um die Wickeltrommel (263c) gewickelt oder davon abgewickelt werden kann.

6. Der elektrisch angetriebene Türvorhang nach einem der Ansprüche 1 bis 5, wobei die Vorhangjalousie (120) durch Elastizität, die durch eine Feder (nicht gezeigt) verursacht wird, in einer Richtung, in der die Vorhangjalousie (120) um die Außenoberfläche der Welle (110) gewickelt wird, an die Außenoberfläche der Welle (110) gedrückt wird, sodass die Vorhangjalousie (120) automatisch um die Außenoberfläche der Welle (110) gewickelt wird, wenn eine durch den Draht (250) verursachte Spannung entfernt wird.

## Revendications

1. Rideau de portière à entraînement électrique comprenant :
une unité de rideau (100) comportant un arbre (110), un store de rideau (120) enroulé autour d'une surface extérieure de l'arbre (110), et une barre de store (130) fixée à une partie supérieure du store de rideau (120) pour supporter le store de rideau (120), et configurée pour protéger sélectivement une vitre d'un véhicule d'un extérieur lorsque le store de rideau (120) est enroulé autour de l'arbre (110) et déroulé de celui-ci ; et
une unité d'entraînement (200) configurée pour déplacer la barre de store (130) vers le haut et vers le bas pour permettre d'enrouler le store de rideau (120) autour de l'arbre (110) et de le dérouler de celui-ci,
dans lequel l'unité d'entraînement (200) comporte :
un rail de guidage (210) disposé sur une partie inférieure de l'arbre (110), dirigé dans une direction croisant l'arbre (110), et ayant une longueur prédéterminée ;
un coulisseau (220) installé de manière à pouvoir se déplacer vers le haut et vers le bas le long du rail de guidage (210), et comportant une poulie mobile (221) installée à l'intérieur du coulisseau (220) de manière à être fixe ou rotative ;
une antenne (230) ayant une extrémité fixée à un côté du coulisseau (220) et une extrémité opposée fixée à la barre de store (130) ;
une poulie fixe (240) installée de manière à être fixe ou rotative à une position adjacente à un côté inférieur de l'arbre (110) ;
un fil (250) ayant une extrémité fixée à une position (250a) adjacente au côté inférieur de l'arbre (110), et configuré pour passer à travers la poulie fixe (240) via la poulie mobile (221) ; et
un dispositif d'enroulement (260) configuré pour enrouler une extrémité opposée du fil (250) afin de régler une longueur du fil (250).

2. Rideau de portière à entraînement électrique selon la revendication 1, dans lequel le dispositif d'enroulement (260) comporte :
un moteur d'entraînement (261) comportant un arbre d'entraînement sur lequel un engrenage à vis sans fin (262) est installé de manière rotative ; et
un bloc d'engrenages (263) en prise avec l'engrenage à vis sans fin (262) de manière à être entraîné en rotation, et autour duquel le fil (250) est enroulé par une rotation de l'engrenage à vis sans fin (262).

3. Rideau de portière à entraînement électrique selon la revendication 2, dans lequel le bloc d'engrenages (263) comporte :
une boîte d'engrenages (263a) formant un espace intérieur ;
un engrenage hélicoïdal (263b) installé dans l'espace intérieur de la boîte d'engrenages (263a) de manière à être en prise de façon rotative avec l'engrenage à vis sans fin (262), et relié à un tambour d'enroulement (263c) autour duquel le fil (250) est enroulé ; et
un dispositif de restriction de rotation (263d) configuré pour restreindre un degré de rotation de l'engrenage hélicoïdal (263b).

4. Rideau de portière à entraînement électrique selon la revendication 3, dans lequel le dispositif de retenue de rotation (263d) comporte :
une roue droite cylindrique (263d-1) installée coaxialement à l'engrenage hélicoïdal (263b) de manière à pouvoir tourner en association avec l'engrenage hélicoïdal (263b) ;
un engrenage d'arrêt (263d-2) installé dans l'espace intérieur de la boîte d'engrenages (263a) de manière à être en prise de façon rotative avec la roue droite cylindrique (263d-1), et comportant une butée côté engrenage (263d-3) faisant saillie à partir d'une surface de plaque latérale de l'engrenage d'arrêt (263d-2) ; et
une butée côté boîte d'engrenages (263d-4) faisantt saillie à partir d'une surface de plaque de la boîte d'engrenages (263a), et en prise avec une surface latérale et une surface latérale opposée de la butée côté boîte d'engrenages (263d-3) en fonction d'une rotation de l'engrenage d'arrêt (263d-2).

5. Rideau de portière à entraînement électrique selon la revendication 4, dans lequel un diamètre de la roue droite cylindrique (263d-1) est relativement plus petit qu'un diamètre de l'engrenage d'arrêt (263d-2) de sorte que le fil (250) peut être enroulé autour du tambour d'enroulement (263c) ou être déroulé de celui-ci d'un degré prédéterminé.

6. Rideau de portière à entraînement électrique selon l'une des revendications 1 à 5, dans lequel le store de rideau (120) est pressé sur la surface extérieure de l'arbre (110) dans une direction dans laquelle le rideau de store (120) est enroulé autour de la surface extérieure de l'arbre (110) par l'élasticité induite par un ressort (non représenté) de sorte que le store de rideau (120) est automatiquement enroulé autour de la surface extérieure de l'arbre (110) lorsqu'une tension induite par le fil (250) est supprimée.
